# EUROPÄISCHE PATENTSCHRIFT

(11) **EP 4 286 275 B1**
(45) Veröffentlichungstag und Bekanntmachung des Hinweises auf die Patenterteilung: **17.09.2025**
(21) Anmeldenummer: 22176239.6
(22) Anmeldetag: 30.05.2022
(51) Int. Cl.: B64D 11/00

(54) **BEFESTIGUNGSSYSTEM MIT TOLERANZKOMPENSATION FÜR EINEN INNENRAUM EINES LUFTFAHRZEUGS**
FASTENING SYSTEM WITH TOLERANCE COMPENSATION FOR AN INTERIOR OF AN AIRCRAFT
SYSTÈME DE FIXATION À COMPENSATION DE TOLÉRANCES POUR UN ESPACE INTÉRIEUR D'UN AÉRONEF

(43) Veröffentlichungstag der Anmeldung: 06.12.2023
(73) Patentinhaber: Airbus Operations GmbH, 21129 Hamburg (DE)
(72) Erfinder: Benthien, Hermann, 21129 Hamburg (DE); Poppe, Andreas, 21129 Hamburg (DE)

(56) Entgegenhaltungen:
- EP-A1- 3 266 705
- DE-A1- 102005 054 890
- DE-A1- 102019 134 746
- DE-A1- 102020 108 392
- DE-A1- 102020 128 089

## Beschreibung

### Technisches Gebiet

Die vorliegende Beschreibung betrifft ein Befestigungssystem zum Befestigen einer Komponente an einer Rumpfstruktur in einem Innenraum eines Luftfahrzeugs, sowie ein Luftfahrzeug mit einem solchen Befestigungssystem und mindestens einer Komponente.

### Technischer Hintergrund

In einem Rumpf eines Verkehrsflugzeugs ist üblicherweise eine Passagierkabine mit einer Vielzahl von Einrichtungsgegenständen vorhanden. Zum Anordnen der Einrichtungsgegenstände werden eine Vielzahl von Haltern an einer Innenseite der Rumpfstruktur angeordnet, die individuell auf die Einrichtungsgegenstände abgestimmt sind und deren sichere Halterung erlauben. Bei größeren Verkehrsflugzeugen mit Rumpflängen von weit über 10 m sind Fertigungstoleranzen zu erwarten, die bei der Anbindung der Halter berücksichtigt werden müssen. Zum Erzielen einer klar vorgegebenen Geometrie ist eine Anpassung der individuellen Halter zum Ausgleich von Maßabweichungen der Rumpfstruktur durchzuführen.

Aus DE 10 2020 108 392 A1 ist eine Befestigungsvorrichtung zum Befestigen eines Kabineninnenbauteils an einer Anbindungsstruktur einer Luftfahrzeugkabine bekannt. Die Anbindungsstruktur weist ein Befestigungsrohr auf, eine Anordnung aus einer Innenhülse und einer Außenhülse, sowie ein Halteelement zum Ausrichten des Kabineninnenbauteils an dem Befestigungsrohr.

DE 10 2020 128 089 A1 schlägt eine Positionierbuchse vor, die dem Einstellen eines Abstandes und einer Orientierung zwischen zwei Luftfahrzeugbauteilen dient. Die Positionierbuchse enthält dabei eine Außenbuchse, die in ein erstes Luftfahrzeugbauteil eingesteckt wird und eine Innenbuchse, die in die Außenbuchse eingesteckt wird. Die Innenbuchse ist grundsätzlich dafür geeignet, ein Luftfahrzeugbauteil aufzunehmen, kann jedoch auch lediglich übliche Befestiger aufnehmen. Insgesamt ermöglicht die Positionierbuchse eine Befestigung des ersten Luftfahrzeugbauteils an dem zweiten Luftfahrzeugbauteil. Die Außenbuchse und die Innenbuchse sind so ausgebildet, dass, wenn die Innenbuchse in der Außenbuchse eingesteckt ist, eine Drehung der Innenbuchse relativ zu der Außenbuchse blockiert ist. Die Positionierbuchse wird bei Befestigungsanordnungen von Luftfahrzeugen verwendet. Insbesondere wird die Positionierbuchse bei der Verbindung von Teilen der Luftfahrzeugstruktur, wie etwa der Primärstruktur beziehungsweise der Sekundärstruktur, verwendet.

### Beschreibung

Es kann als Aufgabe betrachtet werden, ein alternatives Befestigungssystem vorzuschlagen, das einen einfachen Toleranzausgleich realisiert und dabei ein Befestigungsrohr parallel zu einer Längsachse des Luftfahrzeugs ausrichtet und haltert.

Diese Aufgabe wird gelöst durch ein Befestigungssystem mit den Merkmalen des unabhängigen Anspruchs 1. Weitere Ausführungsformen ergeben sich aus den abhängigen Ansprüchen sowie aus der folgenden Beschreibung.

Es wird ein Befestigungssystem zum Befestigen einer Komponente an einer Rumpfstruktur in einem Innenraum eines Luftfahrzeugs vorgeschlagen, aufweisend mehrere biegesteife Halteelemente zur Befestigung an der Rumpfstruktur, eine Positionsausgleichsvorrichtung an jedem der Halteelemente, mindestens einen länglichen Basiskörper, der mit den Halteelementen verbindbar ist, und mindestens ein Befestigungselement, das mit dem Basiskörper und einer zu befestigenden Komponente verbindbar ist, wobei die Halteelemente jeweils mindestens einen Strukturhalter zur Verbindung mit der Rumpfstruktur und einen Aufnahmehalter zum Aufnehmen der betreffenden Positionsausgleichsvorrichtung aufweisen, wobei die Positionsausgleichsvorrichtung eine erste Positionsausgleichsbuchse und eine zweite Positionsausgleichsbuchse aufweist, wobei die erste Positionsausgleichsbuchse drehbar in dem Aufnahmehalter angeordnet ist und eine exzentrische erste Bohrung aufweist, wobei die zweite Positionsausgleichsbuchse drehbar in der ersten Positionsausgleichsbuchse angeordnet ist und eine exzentrische zweite Bohrung aufweist, wobei sich der Basiskörper durch die zweite Öffnung erstreckt und in dieser gehalten ist, und wobei der Basiskörper mindestens entlang einer Hälfte seiner Länge erste Verbindungsmittel aufweist, die mit zweiten Verbindungsmitteln des mindestens einen Befestigungselements komplementär ausgebildet sind, sodass das mindestens eine Befestigungselement an unterschiedlichen Positionen mit dem Basiskörper verbindbar ist.

Die Halteelemente sind dazu vorgesehen, an der Primärstruktur befestigt zu werden. Sie weisen bevorzugt mehrere Strukturhalter auf, um eine Fixierung an der Primärstruktur zu erzielen. Ein solcher Strukturhalter kann beispielsweise eine Öffnung, eine Buchse, ein Flansch oder dergleichen sein, der mittels eines Bolzens oder eines anderen Befestigungselements mit der Primärstruktur verbindbar ist. Ein Halteelement könnte beispielsweise dafür vorgesehen sein, an einem Rumpfspant befestigt zu werden.

Das erfindungsgemäße Befestigungssystem weist eine Vielzahl derartiger Halteelemente auf, die bevorzugt in einem Abstand zueinander entlang der Längsrichtung der Kabine fixiert werden, um daran den länglichen Basiskörper anzuordnen. Es könnte vorgesehen sein, entlang eines wesentlichen Teils der Längsrichtung des Luftfahrzeugs an jedem der Rumpfspante ein derartiges Halteelement anzuordnen. Sind beide Längshälften des Innenraums des Luftfahrzeugs mit Komponenten auszustatten bietet es sich an, Basiskörper an beiden Seiten innerhalb des Innenraums des Luftfahrzeugs anzuordnen.

Die Aufnahmehalter aller Halteelemente einer betreffenden Seite der Rumpfstruktur sind derart angeordnet, dass eine von außen erzeugte, zu der Längsachse des Luftfahrzeugs parallel verlaufende Referenzlinie durch alle Aufnahmehalter verläuft. Eine Referenzlinie könnte beispielsweise durch einen Laser erzeugt und durch die Aufnahmehalter geleitet werden. Ziel ist, die Positionsausgleichsvorrichtungen aller Aufnahmehalter einer Reihe derart einzustellen, dass die Referenzlinie mit der Mittelachse des länglichen Basiskörpers zusammenfällt.

Der Aufnahmehalter eines Halteelements könnte eine Öffnung, eine Bohrung oder eine Buchse aufweisen, in der die erste Positionsausgleichsbuchse einbringbar ist. Diese ist dann in dem Aufnahmehalter drehbar. Die zweite Positionsausgleichsbuchse ist drehbar in der ersten Positionsausgleichsbuchse angeordnet. Da die erste Öffnung und die zweite Öffnung jeweils exzentrisch angeordnet sind, kann durch entsprechendes Rotieren beider Positionsausgleichsbuchsen um bestimmte Winkel die zweite Öffnung so positioniert werden, dass ihre Mittelachse mit der Referenzlinie zusammenfällt. Wird dies bei jeder Positionsausgleichsvorrichtung einer Reihe von Halteelementen durchgeführt, ist die Gesamtheit aller zweiten Öffnungen exakt an der Referenzlinie ausgerichtet und die Mittelachse des darin positionierbaren Basiskörpers fällt mit der Referenzlinie zusammen.

Es versteht sich, dass die erste Positionsausgleichsbuchse und die zweite Positionsausgleichsbuchse fixierbar sind. Hierzu bieten sich unterschiedliche Möglichkeiten an. Beispielsweise könnten beide Positionsausgleichsbuchsen jeweils einen umlaufenden Kragen aufweisen, in denen Öffnungen, ein Profil oder Rillen angeordnet sind, die zum Aufnehmen von Sicherungsstiften, Eingriffsverzahnungen oder anderen Fixierelementen geeignet sind.

Durch die exakte Positionierung des länglichen Basiskörpers wird eine Basis für zu installierende Komponenten in der Rumpfstruktur bereitgestellt, die in ihrer Lage bzw. Ausrichtung von der Rumpfstruktur entkoppelt ist. Trotz der üblichen Fertigungstoleranzen wird eine exakte Ausrichtung des Basiskörpers erreicht und ein zusätzlicher Toleranzausgleich an den zu befestigenden Komponenten ist nicht notwendig.

Die Ausrichtung der Positionsausgleichsvorrichtungen muss nicht manuell erfolgen, sondern könnte auch automatisiert, etwa mittels eines Roboters, ausgeführt werden. Dieser könnte bei der Montage des Luftfahrzeugs auf einem Kabinenfußboden platziert werden und jedes der Halteelemente nacheinander anfahren. Dort könnte eine jeweilige Abweichung der Mittelachse der zweiten Öffnung von der projizierten Referenzlinie untersucht werden, um anhand der ermittelten Abweichung notwendige Rotationen der beiden Positionsausgleichsbuchsen zu ermitteln. Die notwendigen Rotationen können anschließend durch den Roboter umgesetzt werden. Somit könnte nicht nur der Personaleinsatz innerhalb der Kabine bei der Montage verringert werden, sondern auch die Präzision der Einstellung gesteigert werden. Die Anordnung exzentrischer Öffnungen ineinander ist eine besonders einfache und mechanisch zuverlässige Lösung, um einen raschen Toleranzausgleich durchzuführen.

Der Basiskörper kann insbesondere als Rohr ausgebildet sein, welches einen Hohlraum aufweist. Zudem könnte der Basiskörper unterteilt sein, sodass folglich mehrere Teilabschnitte ausgebildet und in Längsrichtung aufeinanderfolgend in der Rumpfstruktur befestigbar sind.

Zum Verbinden des Basiskörpers mit Befestigungselementen ist eine Kombination aus ersten Verbindungsmitteln und zweiten Verbindungsmitteln vorgesehen. Die beiden Verbindungsmittel sind komplementär zueinander ausgebildet, sodass das betreffende Befestigungselement in unterschiedlichen Positionen an dem Basiskörper anbring- und befestigbar ist. Es ist vorstellbar, dass das erste Verbindungsmittel entlang eines wesentlichen Teils der Länge des Basiskörpers vorgesehen ist, sodass praktisch an jeder beliebigen Stelle des Basiskörpers ein Befestigungselement anbringbar ist. Dadurch stellt der längliche Basiskörper eine zuverlässig positionierte und völlig flexible Basis zum Befestigen von Befestigungselementen dar.

Erfindungsgemäß weisen die ersten Verbindungsmittel mindestens eine quer zu der Längsachse des Basiskörpers verlaufende erste Verzahnung auf. Die Verzahnung ist als eine Folge von Rillen und Erhebungen ausgebildet. Die Rillen bzw. Erhebungen stehen quer zu der Längsachse des Basiskörpers. Das Befestigungselement könnte folglich in einer Richtung quer zu der Längsachse an den Basiskörper gebracht und dort mit der ersten Verzahnung in Eingriff gebracht werden. Das Befestigungselement könnte etwa in einer radialen Richtung parallel zu den Rillen aufgeschoben werden. Dabei wird unmittelbar eine Fixierung entlang der Längsachse erreicht, wenn das Befestigungselement mit der ersten Verzahnung korrespondierende Eingriffsmittel, beispielsweise eine zweite Verzahnung aufweist.

In einer vorteilhaften Ausführungsform weist der Basiskörper an zwei einander entgegengesetzten radialen Randabschnitten die erste Verzahnung auf. Die radialen Randabschnitte könnten an einer Oberseite und/oder einer Unterseite des Querschnitts des Basiskörpers angeordnet werden. Der Basiskörper könnte durch das Befestigungselement zangenartig umgriffen werden, sodass hierdurch ein Eingriff in die beiden verzahnten Randabschnitte erfolgt.

In einer vorteilhaften Ausführungsform weist der Basiskörper einen runden Querschnitt auf. Der Querschnitt könnte insbesondere kreisrund sein, sodass eine variable Längsposition des Basiskörpers in der zweiten Öffnung möglich ist. Die Durchmesser des Basiskörpers und der zweiten Öffnung könnten eine Gleit- oder Spielpassung ausbilden. Ein Durchschieben des Basiskörpers durch mehrere aufeinanderfolgende zweite Öffnungen ist dadurch möglich.

In einer vorteilhaften Ausführungsform ist die erste Verzahnung in dem runden Querschnitt ausgebildet, sodass der Basiskörper in der zweiten Öffnung verschiebbar ist. Die Verzahnung ragt nicht aus dem runden Querschnitt nach außen und verhindert folglich nicht das Verschieben des runden Querschnitts in Längsrichtung des Basiskörpers. Die erste Verzahnung könnte so ausgebildet sein, dass zwei diametral einander entgegengesetzt angeordnete Randabschnitte parallel zueinander verzahnt werden. Die Höhe der Verzahnung könnte weniger als die Hälfte des Radius des Basiskörpers umfassen.

In einer vorteilhaften Ausführungsform weist das Befestigungssystem ferner mehrere Sicherungselemente auf, die dazu ausgebildet sind, den Basiskörper an den Halteelementen in Axialrichtung zu sichern. Hierdurch wird die Übertragung von Kräften in Längsrichtung, d.h. entlang des Basiskörpers, in die Rumpfstruktur ermöglicht. Die Sicherungselemente könnten jedem oder einem Großteil der Halteelemente zugeordnet werden, sodass eine sehr gute Verteilung von Axialkräften in die Rumpfstruktur erfolgt.

In einer vorteilhaften Ausführungsform sind die Sicherungselemente dazu ausgebildet, in Axialrichtung vor und hinter den Halteelementen angeordnet und mit dem Basiskörper verbunden zu werden. Die Sicherungselemente könnten etwa mit der ersten Verzahnung in Eingriff gebracht und folglich an dem Basiskörper fixiert werden. Stehen die dem jeweiligen Halteelement zugeordneten zwei Sicherungselemente mit der ersten Verzahnung im Eingriff und stoßen bündig an die Positionsausgleichvorrichtung an, wird hierdurch eine axiale Fixierung des Basiskörpers an der Positionsausgleichvorrichtung erreicht.

In einer vorteilhaften Ausführungsform weist das mindestens eine Befestigungselement eine mit dem Basiskörper komplementäre radiale Vertiefung auf, die radial von außen auf den Basiskörper steckbar ist, wobei die mindestens eine Vertiefung eine zweite Verzahnung aufweist, die mit der ersten Verzahnung komplementär ist. Die radiale Vertiefung könnte etwa wie der Buchstabe U ausgebildet sein und zwei im Wesentlichen parallel zueinander verlaufende Schenkelflächen umfassen, zwischen denen an einer Seite eine gebogene Fläche verläuft. Zumindest an den beiden Schenkelflächen kann die zweite Verzahnung angeordnet sein, die in die ersten Verzahnungen eingreift. Das Befestigungselement lässt sich damit, wie weiter vorangehend bereits erwähnt, in praktisch jeder beliebigen Position radial von außen auf den Basiskörper aufstecken, um direkt eine axiale Fixierung zu erreichen.

In einer vorteilhaften Ausführungsform weist der Basiskörper an mindestens einem der radialen Randabschnitte eine sich in Längsrichtung erstreckende erste Sicherungsnut auf, die mit einer zweiten Sicherungsnut in der Vertiefung des Befestigungselements korrespondiert, wobei das Befestigungssystem ferner einen Sicherungsstift aufweist, der zu einer durch die erste Sicherungsnut und die damit fluchtende zweite Sicherungsnut gebildete Sicherungsöffnung komplementär ausgeformt ist, sodass er das Befestigungselement und den Basiskörper fixiert. Die erste Sicherungsnut könnte sich entlang der gesamten Länge des Basiskörpers erstrecken. Die zweite Sicherungsnut wird mit der ersten Sicherungsnut in Fluchtung gebracht, sodass hierdurch ein gemeinsamer Ausschnitt generiert wird. Durch Einstecken des Sicherungsstifts in axialer Richtung, d.h. parallel zu dem Basiskörper, sind das Befestigungselement und der Basiskörper gegeneinander so fixiert, dass das Befestigungselement nicht von dem Basiskörper abziehbar ist. Die erste Sicherungsnut und die zweite Sicherungsnut umschließen folglich den Sicherungsstift und können aufgrund des in beiden Sicherungsnuten steckenden Materials nicht gegeneinander verschoben oder verdreht werden. Beide Sicherungsnuten könnten einen halbkreisförmigen Querschnitt aufweisen.

In einer vorteilhaften Ausführungsform weisen die erste Positionsausgleichsbuchse und die zweite Positionsausgleichsbuchse jeweils einen umlaufenden Kragen auf, an dem eine Umfangsverzahnung zum Eingreifen eines Werkzeugs einbringbar ist. Dies ermöglicht insbesondere eine automatisierte Einstellung der rotatorischen Lage der Positionsausgleichsbuchsen. Die Verzahnung könnte wie bei einem Zahnrad ausgeführt sein, sodass ein entsprechend verzahntes Ritzel damit in Eingriff bringbar ist, um eine Einstellung der Positionsausgleichsbuchsen zu ermöglichen.

Die Erfindung betrifft ferner ein Luftfahrzeug, aufweisend einen Rumpf mit einer Rumpfstruktur und mindestens eine Komponente, die mit einem vorangehend geschilderten Befestigungssystem an der Rumpfstruktur befestigt ist.

In einer vorteilhaften Ausführungsform ist die Komponente eine Serviceeinheit für Passagiere oder ein Über-Kopf-Staufach.

In einer vorteilhaften Ausführungsform weist der Rumpf eine Längsachse, eine rechte Seite und eine linke Seite auf, wobei entlang eines wesentlichen Teils der rechten Seite und der linken Seite des Rumpfes jeweils mindestens ein Basiskörper an der Rumpfstruktur parallel zu der Längsachse gehaltert ist.

In einer vorteilhaften Ausführungsform sind an der rechten Seite und der linken Seite jeweils mindestens zwei voneinander beabstandete und parallel zu der Längsachse verlaufende Basiskörper angeordnet. Damit kann eine Art Fachwerkstruktur aufgespannt werden, die die Komponenten trägt. Ein erster Stab könnte an einem ersten Basiskörper befestigt werden und ein zweiter Stab an einem zweiten Basiskörper. Die von den Basiskörpern abgewandten Enden der Stäbe könnten einen Knotenpunkt bilden, der mit einer Komponente verbunden ist. Die Komponente könnte mit mehreren, in Längsrichtung aufeinanderfolgenden Knotenpunkten verbunden werden. Weiterhin könnten Diagonalstreben eingesetzt werden, die zu einer Versteifung der Fachwerkstruktur führen.

### Kurze Beschreibung der Figuren

Nachfolgend wird anhand der beigefügten Zeichnungen näher auf Ausführungsbeispiele eingegangen. Die Darstellungen sind schematisch und nicht maßstabsgetreu. Gleiche Bezugszeichen beziehen sich auf gleiche oder ähnliche Elemente. Es zeigen:
- Fig. 1: eine schematische Darstellung eines Befestigungssystems in zwei Ansichten.
- Fig. 2: eine schematische Darstellung eines Roboters in zwei Ansichten, der Positionsausgleichsbuchsen einstellt.
- Fig. 3: eine schematische Ansicht des Befestigungselements an dem Basiskörper.
- Fig. 4a + 4b: schematische Darstellungen des Befestigungselements an dem Basiskörper mit Sicherungsstift.
- Fig. 5: eine schematische Darstellung von Sicherungselementen.
- Fig. 6 - 8: unterschiedliche Darstellungen von Halteelementen.
- Fig. 9: ein Luftfahrzeug.

### Detaillierte Beschreibung von Ausführungsbeispielen

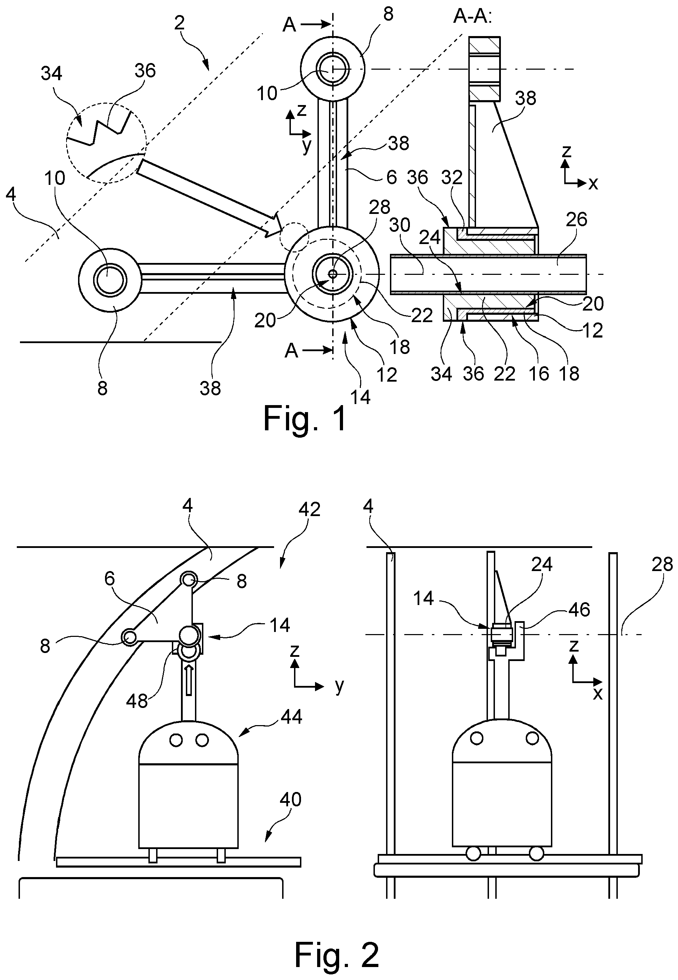

In Fig. 1 ist ein Befestigungssystem 2 zum Befestigen einer Komponente an einer Rumpfstruktur 4 in einem Innenraum eines Luftfahrzeugs in einer Draufsicht in Axialrichtung sowie einer seitlichen Schnittdarstellung gezeigt. Hier ist ein biegesteifes Halteelement 6 mit zwei winklig zueinander angeordneten Schenkeln vorgesehen, das an der Rumpfstruktur 4 befestigt ist. Hierzu weist das Halteelement 6 zwei Strukturhalter 8 auf, die jeweils eine Durchgangsbohrung 10 umfassen. Durch diese könnte ein Bolzen durchgesteckt und mit der Rumpfstruktur 4 verbunden werden. Das Halteelement 6 weist ferner einen Aufnahmehalter 12 auf, in dem eine Positionsausgleichsvorrichtung 14 angeordnet ist.

Das Halteelement 6 ist durch die zweischenklige Gestaltung dazu ausgebildet, in im Wesentlichen zwei Raumrichtungen Kräfte aufzunehmen, in diesem Fall in der z- und y-Richtung, d.h. entlang einer vertikalen Achse und einer nach außen gerichteten, lateralen Achse in dem Luftfahrzeug. Andere Varianten mit anderen Kraftrichtungen sind denkbar.

Der Aufnahmehalter 12 weist eine Aufnahmeöffnung 16 auf, in der eine erste Positionsausgleichsbuchse 18 drehbar gelagert ist. Diese weist eine erste Öffnung 20 auf, in der eine zweite Positionsausgleichsbuchse 22 angeordnet ist. Diese weist wiederum eine zweite Öffnung 24 auf, in der ein länglicher Basiskörper 26 angeordnet ist. Die erste Öffnung 20 und die zweite Öffnung 24 sind jeweils exzentrisch ausgebildet, sodass durch Verdrehen der ersten Positionsausgleichsbuchse 18 und der zweiten Positionsausgleichsbuchse 22 die Position der zweiten Öffnung 24 über einen großen Maßbereich in der z-y-Ebene einstellbar ist. Dadurch kann eine Mittelachse 30 der zweiten Bohrung 24 zu einer Referenzlinie 28, beispielsweise durch einen Laserstrahl kenntlich gemacht, angepasst werden. Unabhängig von der Dimensionstoleranz der Rumpfstruktur 4 und des Halteelements 6 kann folglich der längliche Basiskörper 26 sehr genau platziert werden, um daran Komponenten zu befestigen.

In diesem Ausführungsbeispiel weisen beide Positionsausgleichsbuchen 18 und 22 einen umlaufenden Kragen 32 und 34 auf. Diese umfassen jeweils eine Umfangsverzahnung 36. Durch Eingreifen in die Umfangsverzahnung 36 mit einem Ritzel oder ähnlichem können die beiden Positionsausgleichsbuchsen 18 und 22 rotiert werden, um die Position der zweiten Öffnung 24 im Raum genau einzustellen.

Der Aufnahmehalter 12 ist in diesem Beispiel als eine Zylinderbuchse 12 ausgeführt, die über Versteifungswinkel 38 mit beiden Strukturhaltern 8 verbunden ist. Hierdurch wird eine besonders hohe Biegesteifigkeit erreicht.

Fig. 2 zeigt in einer Zwei-Seiten-Ansicht einen Kabinenfußboden 40 in einem Innenraum 42 eines Luftfahrzeugs, wobei ein Roboter 44 auf dem Kabinenfußboden 40 steht. Mehrere Halteelemente 6 sind an der Rumpfstruktur 4 angebunden und der Roboter 44 ist in Fig. 2 im Begriff, die Position der zweiten Öffnung 24 einzustellen. Der Roboter 44 weist hierzu beispielsweise eine Erfassungseinrichtung 46 zum Erfassen der vorangehend genannten Referenzlinie 28 auf. Die momentane Position der zweiten Bohrung 24 wird ebenso erfasst, um basierend auf einer Abweichung zwischen der Mittellinie 30 und der Referenzlinie 28 eine Rotation der Toleranzausgleichsbuchsen 18 und 22 mittels eines Ritzels 48 durchzuführen.

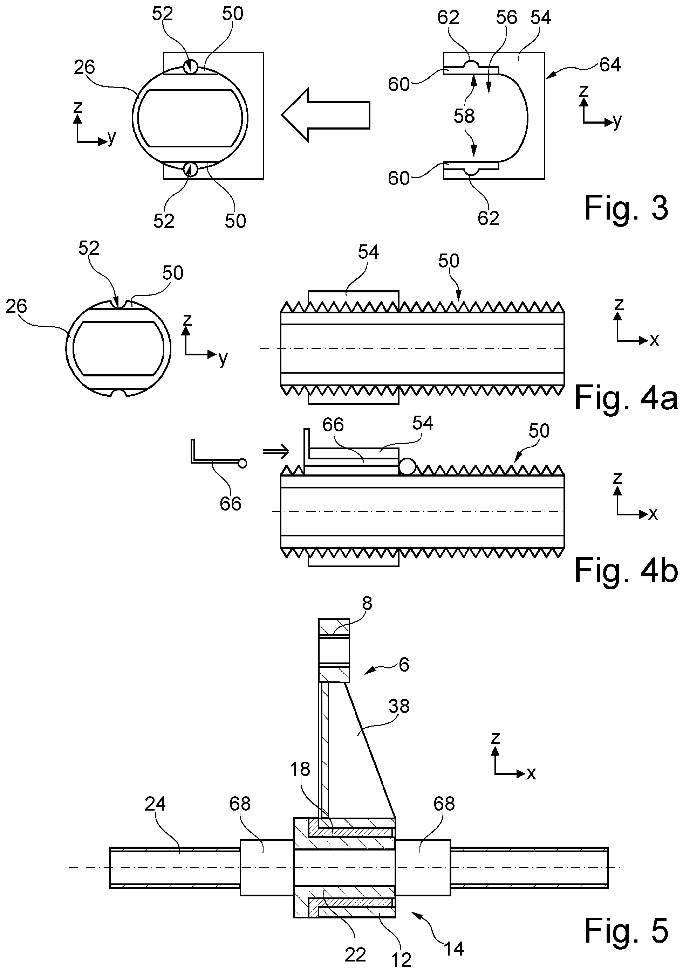

Der Basiskörper 26 kann, wie in Fig. 3 dargestellt, ein Hohlprofil aufweisen. An einer Oberseite und einer Unterseite des Querschnitts befindet sich jeweils eine erste Verzahnung 50, welche vollständig innerhalb eines kreisrunden Querschnitts des Basiskörpers 26 liegt. Die erste Verzahnung 50 wird entlang der Längsachse des Basiskörpers 26 von einer ersten, halbkreisförmigen Nut 52 durchsetzt. Ein Befestigungselement 54 weist eine mit dem Querschnitt des Basiskörpers 26 korrespondierende Vertiefung 56 auf, die hier etwa die Form des Buchstabens U umfasst. An zwei einander gegenüberliegenden Schenkelflächen 58 ist eine zweite Verzahnung 60 angeordnet, die mit der ersten Verzahnung 50 komplementär ausgeführt ist. Das Befestigungselement 54 kann folglich radial seitlich auf den Basiskörper 26 aufgeschoben werden, sodass die erste Verzahnung 50 und die zweite Verzahnung 60 ineinander eingreifen. Das Befestigungselement 54 ist folglich in axialer Richtung, d.h. entlang der x-Achse gesichert.

Zusätzlich dazu ist eine zweite, halbkreisförmige Nut 62 in dem Befestigungselement 54 vorhanden, welche sich nach Anbringen des Befestigungselements 54 an die zweite Verzahnung 60 an die erste Nut 52 anschließt. Die Nuten 52 und 62 bilden damit zusammen einen kreisrunden Querschnitt aus. In diesen kann in axialer Richtung ein Sicherungsstift eingeschoben werden, um eine Sicherung der Position des Befestigungselements 54 an dem Basiskörper 26 zu erlangen. Das Befestigungselement 54 weist eine Schnittstelle 64 auf, die mit der zu installierenden Komponente verbindbar ist.

In den Fig. 4a und 4b wird dies in weiteren Ansichten gezeigt. Hier ist zudem die erste Verzahnung 50 zu sehen, die quer zu der Längsrichtung des Basiskörpers 26 verläuft. Fig. 4b zeigt einen Sicherungsstift 66, der in die Nuten 52 und 62 eingeschoben wird.

Fig. 5 zeigt eine mögliche Ausführung von Sicherungselementen 68, die beispielsweise ähnlich wie die vorangehend gezeigten Befestigungselemente 54 ausgebildet sind und mit dem Basiskörper 26 einen Eingriff herstellen können. Hierzu können die Sicherungselemente 68 direkt vor und direkt hinter der Positionsausgleichsvorrichtung 14 in bündigem Kontakt angeordnet und axial fixiert werden, sodass umgekehrt das Befestigungselement 26 an dem Halteelement 6 fixiert wird.

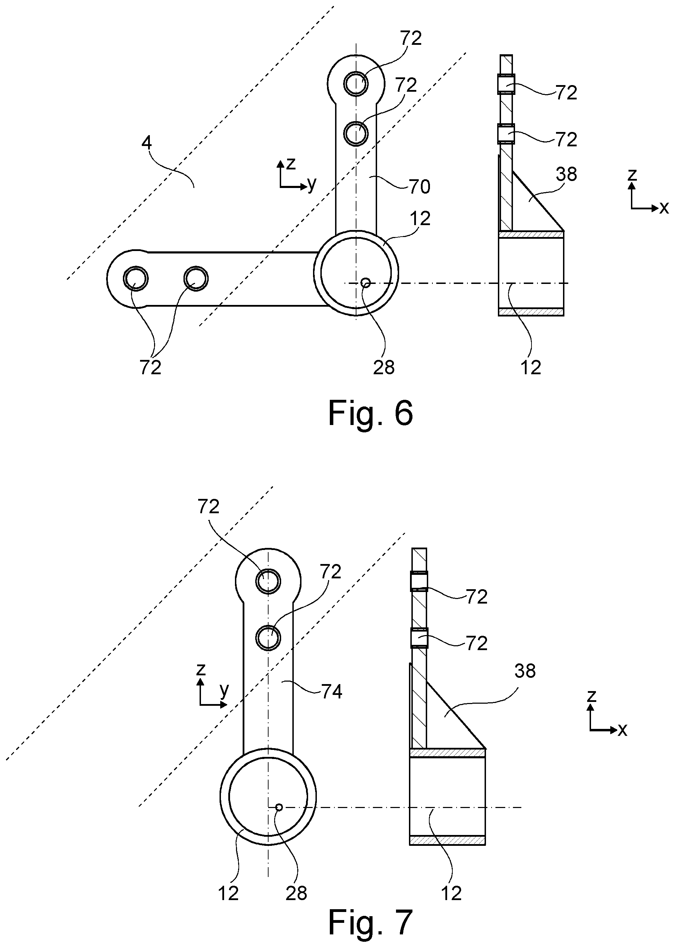

Fig. 6 zeigt eine weitere Ausführung eines zweischenkligen Halteelements 70, das insgesamt vier Strukturhalter 72 aufweist, um das Halteelement 70 an zwei Bereichen der Rumpfstruktur 4 zu befestigen.

Fig. 7 zeigt ein einschenkliges Halteelement 74, das lediglich zur Aufnahme von Kräften im Wesentlichen in einer einzelnen Raumrichtung, hier entlang der z-Achse, d.h. der vertikalen Achse in einem Luftfahrzeug, vorgesehen ist. Dabei sind lediglich zwei Strukturhalter 72 vorgesehen, die in einer Linie mit dem Aufnahmehalter 12 angeordnet sind. Es sind auch Halteelemente 74 denkbar, die in anderen Raumrichtungen angeordnet sind, beispielsweise parallel zu einer y-Achse oder einer z-Achse oder schräg hierzu.

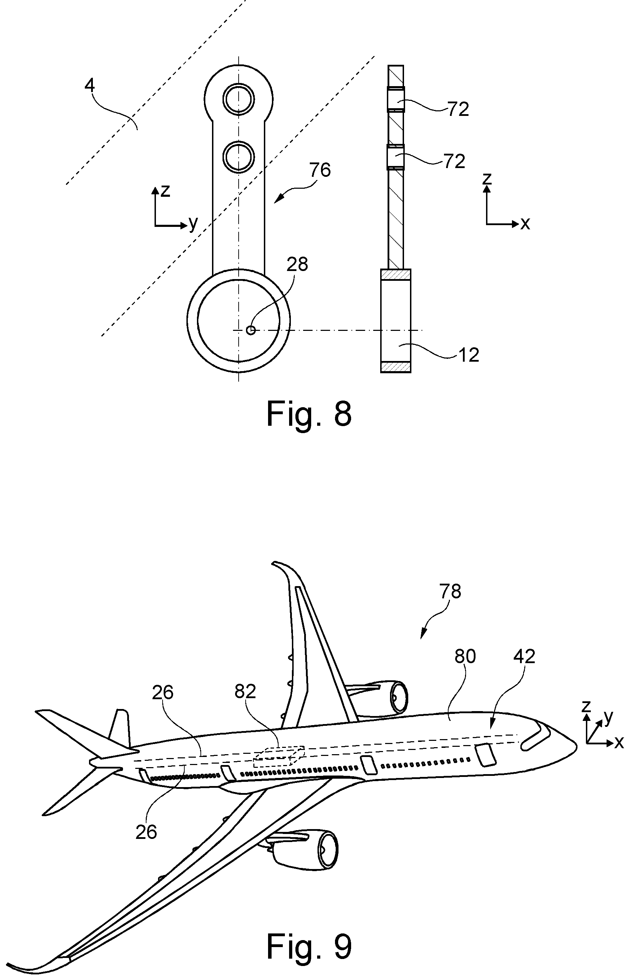

Fig. 8 zeigt eine etwas modifizierte Variante in Form eines Halteelements 76, bei dem der Aufnahmehalter 12 gegenüber der Darstellung aus Fig. 7 in Axialrichtung deutlich verkürzt ist.

Schließlich zeigt Fig. 9 ein Luftfahrzeug 78 mit einem Rumpf 80, der durch die Rumpfstruktur 4 und eine Außenhülle gebildet ist. In dem Innenraum 42 befinden sich, wie auf der rechten Flugzeugseite dargestellt, zwei Basiskörper 26, welche sich parallel zueinander sowie zu der Längsachse x erstrecken. Der Einfachheit halber sind die Basiskörper 26 für die linke Flugzeughälfte ausgelassen. Eine Komponente 82 ist mit gestrichelten Linien dargestellt, die an den Basiskörpern 26 angebunden ist. Hierzu könnten zusätzlich zu den Befestigungselementen 54 auch gelenkig angebundene Stäbe verwendet werden, die eine Fachwerkstruktur ausbilden, dessen räumliche Lage durch die Basiskörper 26 bestimmt wird.

Ergänzend ist darauf hinzuweisen, dass "umfassend" oder "aufweisend" keine anderen Elemente oder Schritte ausschließt und "eine" oder "ein" keine Vielzahl Bezugszeichen in den Ansprüchen sind nicht als Einschränkung anzusehen.

### Bezugszeichenliste

- 2: Befestigungssystem
- 4: Rumpfstruktur
- 6: Halteelement
- 8: Strukturhalter
- 10: Durchgangsbohrung
- 12: Aufnahmehalter
- 14: Positionsausgleichsvorrichtung
- 16: Aufnahmeöffnung
- 18: erste Positionsausgleichsbuchse
- 20: erste Öffnung / Bohrung
- 22: zweite Positionsausgleichsbuchse
- 24: zweite Öffnung / Bohrung
- 26: Basiskörper
- 28: Referenzlinie
- 30: Mittelachse
- 32: umlaufender Kragen
- 34: umlaufender Kragen
- 36: Umfangsverzahnung
- 38: Versteifungswinkel
- 40: Kabinenfußboden
- 42: Innenraum
- 44: Roboter
- 46: Erfassungseinrichtung
- 48: Ritzel
- 50: erste Verzahnung / erste Verbindungsmittel
- 52: erste Nut
- 54: Befestigungselement
- 56: Vertiefung
- 58: Schenkelfläche
- 60: zweite Verzahnung / zweite Verbindungsmittel
- 62: zweite Nut
- 64: Schnittstelle
- 66: Sicherungsstift
- 68: Sicherungselement
- 70: Halteelement
- 72: Strukturhalter
- 74: Halteelement
- 76: Halteelement
- 78: Luftfahrzeug
- 80: Rumpf
- 82: Komponente

## Patentansprüche

1. Befestigungssystem (2) zum Befestigen einer Komponente (82) an einer Rumpfstruktur (4) in einem Innenraum (42) eines Luftfahrzeugs (78), aufweisend:
mehrere biegesteife Halteelemente (6, 70, 74, 76) zur Befestigung an der Rumpfstruktur (4),
eine Positionsausgleichsvorrichtung (14) an jedem der Halteelemente (6, 70, 74, 76),
mindestens einen länglichen Basiskörper (26), der mit den Halteelementen (6, 70, 74, 76) verbindbar ist, und
mindestens ein Befestigungselement (54), das mit dem Basiskörper (26) und einer zu befestigenden Komponente (82) verbindbar ist,
wobei die Halteelemente (6, 70, 74, 76) jeweils mindestens einen Strukturhalter (8) zur Verbindung mit der Rumpfstruktur (4) und einen Aufnahmehalter (12) zum Aufnehmen der betreffenden Positionsausgleichsvorrichtung (14) aufweisen,
wobei die Positionsausgleichsvorrichtung (14) eine erste Positionsausgleichsbuchse (18) und eine zweite Positionsausgleichsbuchse (22) aufweist,
wobei die erste Positionsausgleichsbuchse (18) drehbar in dem Aufnahmehalter (12) angeordnet ist und eine exzentrische erste Bohrung (20) aufweist,
wobei die zweite Positionsausgleichsbuchse (22) drehbar in der ersten Positionsausgleichsbuchse (18) angeordnet ist und eine exzentrische zweite Bohrung (24) aufweist,
wobei sich der Basiskörper (26) durch die zweite Öffnung (24) erstreckt und in dieser gehalten ist,
wobei der Basiskörper (26) mindestens entlang einer Hälfte seiner Länge erste Verbindungsmittel (50) aufweist, die mit zweiten Verbindungsmitteln (60) des mindestens einen Befestigungselements (54) komplementär ausgebildet sind, sodass das mindestens eine Befestigungselement (54) an unterschiedlichen Positionen mit dem Basiskörper (26) verbindbar ist, und
wobei die ersten Verbindungsmittel mindestens eine quer zu der Längsachse des Basiskörpers (26) verlaufende erste Verzahnung (50) aufweisen.

2. Befestigungssystem (2) nach Anspruch 1,
wobei der Basiskörper (26) an zwei einander entgegengesetzten radialen Randabschnitten die erste Verzahnung (50) aufweist.

3. Befestigungssystem (2) nach einem der vorhergehenden Ansprüche,
wobei der Basiskörper (26) einen runden Querschnitt aufweist.

4. Befestigungssystem (2) nach Anspruch 2 und 3,
wobei die erste Verzahnung (50) in dem runden Querschnitt ausgebildet ist, sodass der Basiskörper (26) in der zweiten Öffnung (24) verschiebbar ist.

5. Befestigungssystem (2) nach einem der vorhergehenden Ansprüche,
ferner aufweisend mehrere Sicherungselemente (68), die dazu ausgebildet sind, den Basiskörper an den Halteelementen (6, 70, 74, 76) in Axialrichtung zu sichern.

6. Befestigungssystem (2) nach Anspruch 5,
wobei die Sicherungselemente (68) dazu ausgebildet sind, in Axialrichtung direkt vor und hinter den Halteelementen (6, 70, 74, 76) angeordnet und mit dem Basiskörper (26) verbunden zu werden.

7. Befestigungssystem (2) nach Anspruch 1 oder 2,
wobei das mindestens eine Befestigungselement (54) eine mit dem Basiskörper (26) komplementäre radiale Vertiefung (56) aufweist, die radial von außen auf den Basiskörper (26) steckbar ist, und
wobei die mindestens eine Vertiefung (56) eine zweite Verzahnung (60) aufweist, die mit der ersten Verzahnung (50) komplementär ist.

8. Befestigungssystem (2) nach Anspruch 7,
wobei der Basiskörper (26) an mindestens einem der radialen Randabschnitte eine sich in Längsrichtung erstreckende erste Sicherungsnut (52) aufweist, die mit einer zweiten Sicherungsnut (62) in der Vertiefung (56) des Befestigungselements (54) korrespondiert, und
ferner aufweisend einen Sicherungsstift (66), der zu einer durch die erste Sicherungsnut (52) und die damit fluchtende zweite Sicherungsnut (62) gebildete Sicherungsöffnung komplementär ausgeformt ist, sodass er das Befestigungselement (54) und den Basiskörper (26) fixiert.

9. Befestigungssystem (2) nach einem der vorhergehenden Ansprüche,
wobei die erste Positionsausgleichsbuchse (18) und die zweite Positionsausgleichsbuchse (22) jeweils einen umlaufenden Kragen (32, 34) aufweisen, an dem eine Umfangsverzahnung (36) zum Eingreifen eines Werkzeugs einbringbar ist.

10. Luftfahrzeug (78), aufweisend einen Rumpf (80) mit einer Rumpfstruktur (4) und mindestens eine Komponente (82), die mit einem Befestigungssystem (2) nach einem der Ansprüche 1 bis 9 an der Rumpfstruktur (4) befestigt ist.

11. Luftfahrzeug (78) nach Anspruch 10,
wobei die Komponente (82) eine Serviceeinheit für Passagiere oder ein Über-Kopf-Staufach ist.

12. Luftfahrzeug (78) nach Anspruch 10 oder 11,
wobei der Rumpf (80) eine Längsachse, eine rechte Seite und eine linke Seite aufweist, und
wobei entlang eines wesentlichen Teils der rechten Seite und der linken Seite des Rumpfes (80) jeweils mindestens ein Basiskörper (26) an der Rumpfstruktur (4) parallel zu der Längsachse gehaltert ist.

13. Luftfahrzeug (78) nach Anspruch 12,
wobei an der rechten Seite und der linken Seite jeweils mindestens zwei voneinander beabstandete und parallel zu der Längsachse verlaufende Basiskörper (26) angeordnet sind.

## Claims

1. Fastening system (2) for fastening a component (82) to a fuselage structure (4) in an interior (42) of an aircraft (78), comprising:
a plurality of rigid holding elements (6, 70, 74, 76) for fastening to the fuselage structure (4),
a position compensation device (14) on each of the holding elements (6, 70, 74, 76),
at least one elongate base body (26) which is connectable to the holding elements (6, 70, 74, 76), and
at least one fastening element (54) which is connectable to the base body (26) and a component (82) to be fastened,
wherein the holding elements (6, 70, 74, 76) each have at least one structure holder (8) for connection to the fuselage structure (4) and a receiving holder (12) for receiving the respective position compensation device (14),
wherein the position compensation device (14) comprises a first position compensation bushing (18) and a second position compensation bushing (22),
wherein the first position compensation bushing (18) is rotatably arranged in the receiving holder (12) and has an eccentric first bore (20),
wherein the second position compensation bushing (22) is rotatable in the first position compensation bushing (18) and has an eccentric second bore (24),
wherein the base body (26) extends through the second opening (24) and is held therein,
wherein the base body (26) has first connecting means (50) along at least half of its length, which are formed complementary to second connecting means (60) of the at least one fastening element (54), so that the at least one fastening element (54) can be connected to the base body (26) at different positions, and
wherein the first connecting means have at least one first toothing (50) extending transversely to the longitudinal axis of the base body (26).

2. Fastening system (2) according to claim 1, wherein the base body (26) comprises the first toothing (50) at two opposite radial edge sections.

3. Fastening system (2) according to one of the preceding claims, wherein the base body (26) has a round cross-section.

4. Fastening system (2) according to claim 2 and 3, wherein the first toothing (50) is formed in the round cross-section, so that the base body (26) is displaceable in the second opening (24).

5. Fastening system (2) according to one of the preceding claims, further comprising a plurality of securing elements (68) which are designed to secure the base body to the holding elements (6, 70, 74, 76) in the axial direction.

6. Fastening system (2) according to claim 5, wherein the securing elements (68) are designed to be arranged in the axial direction directly in front of and behind the holding elements (6, 70, 74, 76) and to be connected to the base body (26).

7. Fastening system (2) according to claim 1 or 2, wherein the at least one fastening element (54) has a radial recess (56) complementary to the base body (26) and which can be plugged radially from the outside onto the base body (26), and wherein the at least one recess (56) has a second toothing (60) complementary to the first toothing (50).

8. Fastening system (2) according to claim 7, wherein the base body (26) has on at least one of the radial edge sections a longitudinally extending first securing groove (52) which corresponds to a second securing groove (62) in the recess (56) of the fastening element (54), and further comprising a locking pin (66) which is shaped complementarily to a safety opening that is formed by the first securing groove (52) and the second securing groove (62) aligned therewith so that it fixes the fastening element (54) and the base body (26).

9. Fastening system (2) according to one of the preceding claims, wherein the first position compensation bushing (18) and the second position compensation bushing (22) each have a circumferential collar (32, 34) on which a peripheral gearing (36) can be inserted to engage a tool.

10. Aircraft (78) comprising a fuselage (80) with a fuselage structure (4) and at least one component (82) which is fastened to the fuselage structure (4) by means of a fastening system (2) according to one of claims 1 to 9.

11. Aircraft (78) according to claim 10, wherein the component (82) is a passenger service unit or an overhead storage compartment.

12. Aircraft (78) according to claim 10 or 11, wherein the fuselage (80) has a longitudinal axis, a right side and a left side, and wherein along a substantial part of the right side and the left side of the fuselage (80) at least one base body (26) is held on the fuselage structure (4) parallel to the longitudinal axis.

13. Aircraft (78) according to claim 12, wherein at least two base bodies (26) spaced apart from one another are arranged parallel to the longitudinal axis on the right side and the left side.

## Revendications

1. Système de fixation (2) pour fixer un composant (82) à une structure de fuselage (4) dans un intérieur (42) d'un aéronef (78), comprenant:
une pluralité d'éléments de maintien rigides (6, 70, 74, 76) pour la fixation à la structure de fuselage (4),
un dispositif de compensation de position (14) sur chacun des éléments de maintien (6, 70, 74, 76),
au moins un corps de base allongé (26) qui peut être relié aux éléments de maintien (6, 70, 74, 76), et
au moins un élément de fixation (54) qui peut être relié au corps de base (26) et à un composant (82) à fixer, les éléments de maintien (6, 70, 74, 76) comportant chacun au moins un support de structure (8) pour la connexion à la structure de fuselage (4) et un support de réception (12) pour recevoir le dispositif de compensation de position (14),
dans lequel le dispositif de compensation de position (14) comporte une première douille de compensation de position (18) et une deuxième douille de compensation de position (22),
dans lequel la première douille de compensation de position (18) est disposé de manière rotative dans le support de réception (12) et comporte un premier alésage excentrique (20),
dans lequel la seconde douille de compensation de position (22) est disposée de manière rotative dans la première douille de compensation de position (18) et comporte un deuxième alésage excentrique (24),
dans lequel le corps de base (26) s'étend à travers la deuxième ouverture (24) et y est maintenu,
dans lequel le corps de base (26) comporte des premiers moyens de connexion (50) sur au moins la moitié de sa longueur, qui sont connectés à des deuxièmes moyens de connexion (60) de l'au moins un élément de fixation(54) sont conçus de manière complémentaire, de sorte que le ou les éléments de fixation (54) peuvent être reliés au corps de base (26) à différentes positions, et
dans lequel les premiers moyens de connexion comportent au moins une première denture (50) s'étendant transversalement à l'axe longitudinal du corps de base (26).

2. Système de fixation (2) selon la revendication 1, le corps de base (26) présentant la première denture (50) sur deux sections de bord radiales opposées l'une à l'autre.

3. Système de fixation (2) selon l'une des revendications précédentes, dans lequel le corps de base (26) présente une section transversale ronde.

4. Système de fixation (2) selon la revendication 2 et 3, dans lequel la première denture (50) est formée dans la section transversale ronde, de sorte que le corps de base (26) est déplaçable dans la deuxième ouverture (24).

5. Système de fixation (2) selon l'une des revendications précédentes, comprenant en outre une pluralité d'éléments de fixation (68) qui sont conçus pour fixer le corps de base aux éléments de maintien (6, 70, 74, 76) dans la direction axiale.

6. Système de fixation (2) selon la revendication 5, dans lequel les éléments de fixation (68) sont conçus pour être disposés dans la direction axiale directement devant et derrière les éléments de maintien (6, 70, 74, 76) et pour être reliés au corps de base (26).

7. Système de fixation (2) selon la revendication 1 ou 2, dans lequel l'au moins un élément de fixation (54) présente un évidement radial (56) complémentaire du corps de base (26) et qui peut être enfiché radialement de l'extérieur sur le corps de base (26), et dans lequel l'au moins un évidement (56) présente une deuxième denture (60) complémentaire de la première denture (50).

8. Système de fixation (2) selon la revendication 7, dans lequel le corps de base (26) présente sur au moins une des sections de bord radiales une première rainure de fixation (52) s'étendant longitudinalement, qui est reliée à une seconde rainure de fixation (62) dans l'évidement (56) de l'élément de fixation (54) correspond, et comprenant en outre une goupille de verrouillage (66) qui est formée par la première rainure de fixation (52) et la seconde rainure de fixation (62) alignée avec celle-ci ouverture de sécurité est de forme complémentaire de manière à fixer l'élément de fixation (54) et le corps de base (26).

9. Système de fixation (2) selon l'une des revendications précédentes, dans lequel la première douille de compensation de position (18) et la deuxième douille de compensation de position (22) ont chacun un collier circonférentiel (32, 34) sur lequel une denture périphérique (36) peut être inséré pour engager un outil.

10. Aéronef (78) comprenant un fuselage (80) avec une structure de fuselage (4) et au moins un composant (82) qui est fixé à la structure de fuselage (4) au moyen d'un système de fixation (2) selon l'une des revendications 1 à 9.

11. Aéronef (78) selon la revendication 10, dans lequel le composant (82) est une unité de service passagers ou un compartiment de rangement supérieur.

12. Aéronef (78) selon la revendication 10 ou 11, dans lequel le fuselage (80) présente un axe longitudinal, un côté droit et un côté gauche, et dans lequel, le long d'une partie substantielle des côtés droit et gauche du fuselage (80), au moins un corps de base (26) est détenu sur la structure de fuselage (4) parallèlement à l'axe longitudinal.

13. Aéronef (78) selon la revendication 12, dans lequel au moins deux corps de base (26) sont disposés sur le côté droit et le côté gauche de forme espacés l'un de l'autre et s'étendant parallèlement à l'axe longitudinal.
